# EUROPÄISCHE PATENTANMELDUNG

(11) **EP 1 530 124 A2**
(43) Veröffentlichungstag der Anmeldung: **11.05.2005**
(21) Anmeldenummer: 04025491.4
(22) Anmeldetag: 27.10.2004
(51) Int. Cl.: G06F 3/033

(54) **Eingabevorrichtung für eine Datenverarbeitungseinrichtung**

(30) Priorität: 04.11.2003 DE 10351417
(71) Anmelder: Wincor Nixdorf International GmbH, 33106 Paderborn (DE)
(72) Erfinder: Luttermann, Günter, 33154 Salzkotten (DE); Urban, Uwe, 33102 Paderborn (DE)
(74) Vertreter: Specht, Peter, Dipl.-Phys.

(57) **Zusammenfassung**

Eine Eingabevorrichtung für einer Datenverarbeitungseinrichtung mit einem Bildschirm, insbesondere für ein Selbstbedienungsgerät, umfasst eine in zwei Richtungen bewegliche Griffeinheit (3) mit wenigstens einer Eingabetaste (4,5) und einen Navigationsstift (2), der auf einer Navigationsfläche (6) mittels einer Plattenanordnung geführt wird. Die Griffeinheit (3) ist fest mit der Plattenanordnung verbunden und kann nicht vom Selbstbedienungsgerät abgehoben werden. Die Position des Navigationsstiftes (2) auf der Navigationsfläche (6) ist ermittelbar und in ein elektrisches Signal umsetzbar.

## Beschreibung

Die Erfindung betrifft eine Eingabevorrichtung für eine Datenverarbeitungseinrichtung mit einem Bildschirm, insbesondere für ein Selbstbedienungsgerät nach dem Oberbegriff des Anspruchs 1.

Eingabevorrichtungen für Computer sind in verschiedensten Ausführungsbeispielen bekannt, so als Maus oder Rollkugel. Diese Eingabevorrichtungen haben sich an sich bewährt, sind allerdings für einen Einsatz an Selbstbedienungsgeräten i. allg. nicht geeignet, da sie zu leicht beschädigt oder sogar vom Gerät abgerissen werden können. An Selbstbedienungsgeräten hat sich daher der Touch-Screen als übliche Eingabevorrichtung durchgesetzt. Allerdings sind diese Eingabevorrichtungen für kompliziertere Menüsteuerungen weniger geeignet, da nur eine relativ grobe Eingabe möglich ist.

Es ist daher Aufgabe der Erfindung, eine Eingabevorrichtung der gattungsgemäßen Art zu schaffen, welche auf einfache Weise gegen Vandalismus und Diebstahl gesichert ist und dabei die Funktionalität einer Computermaus aufweist.

Die Erfindung löst diese Aufgabe durch den Gegenstand des Anspruchs 1.

Da die Griffeinheit und ein mit ihr verbundener Navigationsstift vorzugsweise unlösbar mit einer Halterungsfläche, die an dem Selbstbedienungsgerät angeordnet ist, verbunden ist, wird sie auf einfache Weise gegen Diebstahl und Beschädigungen gesichert. Dennoch bietet sie alle Funktionalitäten einer Maus, und zwar insbeson-' dere den Vorteil, präzise auf einer Navigationsfläche zweidimensional beweglich zu sein, wobei die Position ermittelbar und mit einer Markierung (Cursorsignal) auf einem Bildschirm korrelierbar ist, was gerade bei umfangreicheren Menüsteuerungen von Vorteil ist.

Nach einer besonders einfach konstruktiv zu realisierenden Variante ist die Navigationsfläche als Touch-Screen-Folie ausgelegt, so dass die absolute Position des Navigationsstiftes erfassbar ist. Der Navigationsstift wird über die Touch-Screen-Folie mittels einer Führungsplatte bewegt, die an einer Halterungsfläche mittels einer Lageranordnung frei verschieblich angeordnet ist. Die Halterungsfläche enthält einen Führungsausschnitt, innerhalb dessen der Navigationsstift bewegbar ist.

Vorzugsweise ist unterhalb der Halterungsfläche eine weitere Führungsplatte angeordnet, welche ebenfalls von der Navigationsspitze durchsetzt und gemeinsam mit dieser und der ersten Führungsplatte relativ zur Halterungsfläche verschieblich geführt ist. Derart wird auf einfache Weise nicht nur eine doppelte Führung und Lagerung der Griffeinheit an der Halterungsfläche realisiert und der Ausschnitt in der Halterungsfläche auf einfache Weise gegen das Eindringen von Staub und Schmutz abgesichert, sondern es wird auch auf besonders einfache Weise ein Abheben der Griffeinheit von der Halterungsfläche verhindert.

Zweckmäßig entspricht die Fläche des Ausschnittes der Fläche der Navigationsfläche.

Weitere vorteilhafte Ausgestaltungen sind den übrigen Unteransprüchen zu entnehmen.

Nachfolgend wird die Erfindung in Verbindung mit einer Zeichnung anhand eines Ausführungsbeispiels näher beschrieben.

In der Zeichnung zeigt:

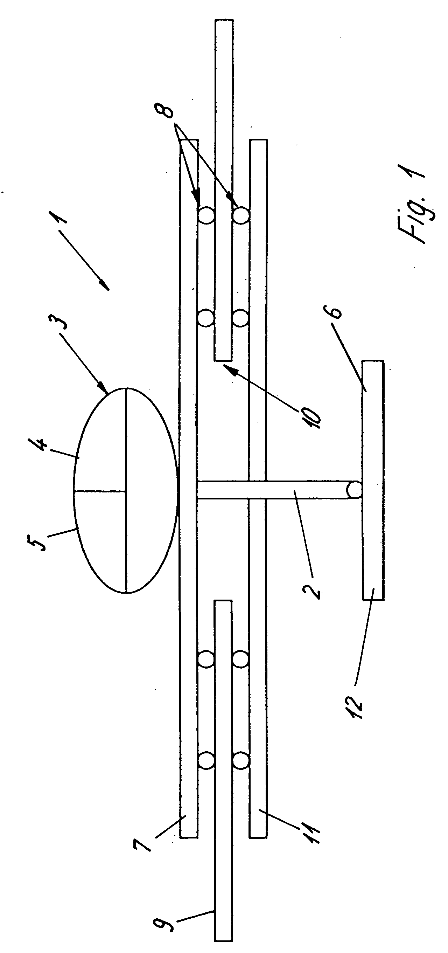

- Fig. 1: eine schematische Seitenansicht einer erfindungsgemäßen Eingabevorrichtung.

Eine in der Fig. 1 dargestellte Eingabevorrichtung 1 für eine Datenverarbeitungseinrichtung, insbesondere in einem Selbstbedienungsgerät, besteht aus einem Navigationsstift 2 und einer Griffeinheit 3. Die Griffeinheit 3 weist zumindest eine, hier zwei Eingabetasten 4, 5 auf. Der Navigationsstift 2 ist auf einer Navigationsfläche 6 in zwei Richtungen beweglich angeordnet. Für die Dimensionierung der Navigationsfläche 6 ist das Verhältnis von Höhe und Breite eines Computerbildschirm, für den die Eingabevorrichtung einsetzbar ist, zwingend erforderlich. Vorzugsweise weist die Griffeinheit 3 eine ovale Formgebung auf, an dessen Oberfläche die Eingabetasten 3, 4 angeordnet sind.

Die Griffeinheit 3 ist fest mit einer Führungsplatte 7 verbunden, welche an ihrer Unterseite über eine Lageranordnung 8 auf einer Halterungsfläche 9, die vorzugsweise an einem hier nicht dargestellten Selbstbedienungsgerät angeordnet ist, verschieblich geführt ist. Die Halterungsfläche 9 weist einen Führungsausschnitt 10 auf, dessen Fläche vorteilhafterweise der Größe der benötigten Navigationsfläche 5 entspricht. Denkbar ist hier beispielsweise eine Ausschnittsgröße von nur 3 x 5 cm. Durch die Führungsplatte 7 ist zudem der Führungsausschnitt 10 gegen ein Eindringen von Staub und Dreck auf einfache Weise gesichert.

Um ein Anheben des Navigationsstiftes 2 zu verhindern, ist vorteilhafterweise unterhalb der Halterungsfläche 9 eine weitere Führungsplatte 11 angeordnet, die gleichfalls mit einer Lageranordnung 8 auf der Halterungsfläche 9 verschieblich geführt ist. Diese Platte 11 ist von dem Navigationsstift 2 durchsetzt und wird somit durch das Verschieben des Navigationsstiftes 2 bewegt. Durch Bewegen der Griffeinheit 3 wird der Navigationsstift 2 auf der Navigationsfläche 6 bewegt, wobei der Navigationsstift 2 von den beiden Führungsplatten 7, 11 geführt wird. Die Position des Navigationsstifts 2 auf der Navigationsfläche 6 ist beispielsweise induktiv oder über eine Widerstandmessung in an sich bekannter Weise ermittelbar (hier nicht dargestellt). In dem hier dargestellten Ausführungsbeispiel erfolgt die Positionsermittlung mittels einer Touchscreenfolie 12, auf welche die Spitze des Navigationsstiftes 2 einwirkt. Eine nachgeschaltete Steuereinrichtung korreliert das Positionssignal des Navigationsstiftes 2 in an sich bekannter Weise mit einer Markierung (Cursordarstellung) auf dem Bildschirm der Datenverarbeitungseinrichtung des Selbstbedienungsgerätes.

### Bezugszeichen

- Eingabevorrichtung: 1
- Navigationsstift: 2
- Griffeinheit: 3
- Eingabetasten: 4,5
- Navigationsfläche: 6
- Führungsplatte: 7
- Lageranordnung: 8
- Halterungsfläche: 9
- Führungsausschnitt: 10
- zweite Führungsplatte: 11
- Touchscreenfolie: 12

## Patentansprüche

1. Eingabevorrichtung für eine Datenverarbeitungsanordnung mit einem Bildschirm, insbesondere für ein Selbstbedienungsgerät, mit einer beweglichen Markierung auf dem Bildschirm und einer Navigationsfläche (6) und einer in zwei Richtungen beweglichen Griffeinheit (3) mit wenigstens einer Eingabetaste (4,5), wobei die Position der Griffeinheit (3) auf der Navigationsfläche (6) ermittelbar und in eine Position der Markierung auf dem Bildschirm umsetzbar ist, **dadurch gekennzeichnet, dass**
- die Griffeinheit (3) mit einem Navigationsstift (2) verbunden ist, der die Navigationsfläche (6) abtastet,
- und die Griffeinheit (3) und der Navigationsstift (2) mit einer gegenüber einer Halterungsfläche (9) verschieblich gelagerten Führungsplatte (7) fest verbunden sind,
- und die Halterungsfläche (9) einen Führungsausschnitt (10) zum Bewegen des Navigationsstiftes (2) aufweist.

2. Eingabevorrichtung nach Anspruch 1, **dadurch gekennzeichnet, dass** die Navigationsfläche (6) als Touch-Screen-Folie ausgelegt ist.

3. Eingabevorrichtung nach Anspruch 1 oder 2, **dadurch gekennzeichnet, dass** die Fläche des Führungsausschnitts (10) der Fläche der Navigationsfläche (6) entspricht.

4. Eingabevorrichtung nach einem oder mehreren der vorstehenden Ansprüche, **dadurch gekennzeichnet, dass** die Führungsplatte (7) mittels einer Lageranordnung (8) an der Oberseite der Halterungsfläche (9) verschieblich geführt ist.

5. Eingabevorrichtung nach einem oder mehreren der vorstehenden Ansprüche, **dadurch gekennzeichnet, dass** unterhalb der Halterungsplatte (9) eine weitere Führungsplatte (11) angeordnet ist, welche ebenfalls von dem Navigationsstift (2) durchsetzt und gemeinsam mit diesem und der Führungsplatte (7) relativ zur Halterungsfläche (9) verschieblich geführt ist.

6. Eingabevorrichtung nach einem der vorstehenden Ansprüche, **dadurch gekennzeichnet, dass** zwischen der weiteren Platte (11) und der Unterseite der Halterungsfläche (9) ebenfalls eine Lageranordnung (8) ausgebildet ist.

7. Eingabevorrichtung nach einem der vorstehenden Ansprüche, **dadurch gekennzeichnet, dass** die Position des Navigationsstiftes (2) induktiv oder über eine Widerstandmessung ermittelbar ist.

8. Eingabevorrichtung nach einem der vorstehenden Ansprüche, **dadurch gekennzeichnet, dass** eine Steuereinrichtung vorgesehen ist, die das Positionssignal des Navigationsstiftes (2) in an sich bekannter Weise mit der Position der Markierung (Cursordarstellung) auf dem Bildschirm korreliert.
